# EUROPEAN PATENT APPLICATION

(11) **EP 3 354 498 A1**
(43) Date of publication of application: **01.08.2018**
(21) Application number: 16848540.7
(22) Date of filing: 13.09.2016
(51) Int. Cl.: B60G 21/073

(54) **SUSPENSION DEVICE**

(30) Priority: 24.09.2015 JP 2015186452
(71) Applicant: KYB Corporation, Tokyo 105-6111 (JP)
(72) Inventor: CHIKAMATSU, Satoshi, Tokyo 105-6111 (JP); KAWAKAMI, Hideki, Tokyo 105-6111 (JP)
(74) Representative: Grünecker Patent- und Rechtsanwälte PartG mbB
(86) International application number: PCT/JP2016/077010
(87) International publication number: WO 2017/051752

(57) **Abstract**

a suspension apparatus 1 includes a first extension-side damping valve EVL provided in the first flow path P1; a first contraction-side damping valve CVR provided in the first flow path P1 in parallel with the first extension-side damping valve EVL; a second extension-side damping valve EVR provided in the second flow path P2; a second contraction-side damping valve CVL provided in the second flow path P2 in parallel with the second extension-side damping valve EVR; a first damping valve VL configured to impart resistance to the flow of fluid from the first flow path P1 to the first accumulator AL; a first check valve GL disposed in parallel with the first damping valve VL; a second damping valve VR configured to impart resistance to the flow of fluid from the second flow path P2 to the second accumulator AR; and a second check valve GR disposed in parallel with the second damping valve VR.

## Description

### TECHNICAL FIELD

The present invention relates to a suspension apparatus.

### BACKGROUND ART

JP2013-100058A discloses a suspension apparatus that can suppress a change in posture of a vehicle. This suspension apparatus includes a pair of hydraulic cylinders, one of which is mounted between a vehicle body and a right wheel and the other of which is mounted between the vehicle body and a left wheel, a first oil passage connecting an extension-side chamber of one hydraulic cylinder with a contraction-side chamber of the other hydraulic cylinder, a second oil passage connecting a contraction-side chamber of one hydraulic cylinder with an extension-side chamber of the other hydraulic cylinder, a first accumulator connected to the first oil passage, a second accumulator connected to the second oil passage, a first upper hydraulic damping mechanism and a first lower hydraulic damping mechanism provided in the first oil passage in such a way as to sandwich a connecting point between the first oil passage and the first accumulator, a second upper hydraulic damping mechanism and a second lower hydraulic damping mechanism provided in the second oil passage in such a way as to sandwich a connecting point between the second oil passage and the second accumulator, and accumulator hydraulic damping mechanisms provided between the first oil passage and the first accumulator and between the second oil passage and the second accumulator.

According to the above-mentioned suspension apparatus, when extensions of respective hydraulic cylinders are in the same phase, hydraulic oil in the extension-side chamber of one hydraulic cylinder is supplied to the contraction-side chamber of the other hydraulic cylinder through the first oil passage, and hydraulic oil in the extension-side chamber of the other hydraulic cylinder is supplied to the contraction-side chamber of one hydraulic cylinder through the second oil passage. Therefore, each accumulator receives or supplies hydraulic oil from or to the cylinder by an amount comparable to the volume of a piston rod moving into and out of the cylinder. The same is true when contractions of respective hydraulic cylinders are in the same phase. To the contrary, when extension of one hydraulic cylinder and contraction of the other hydraulic cylinder are opposite in phase, the hydraulic oil is discharged to the first oil passage from the extension-side chamber of one hydraulic cylinder and the contraction-side chamber of the other hydraulic cylinder, and hydraulic oil is supplied from the second oil passage to the extension-side chamber of the other hydraulic cylinder and the contraction-side chamber of one hydraulic cylinder. Therefore, compared to a case where extensions and contractions of respective hydraulic cylinders are in the same phase, respective accumulators receive or supply a large amount of hydraulic oil from or to the cylinders. The same is true when contraction of one hydraulic cylinder and extension of the other hydraulic cylinder are opposite in phase.

Accordingly, in a case where extensions and contractions of respective hydraulic cylinders are opposite in phase, compared to the case where extensions and contractions of respective hydraulic cylinders are in the same phase, the volume change of gas chambers in respective accumulators is larger and the spring reaction force of each accumulator is larger. Further, the amount of hydraulic oil passing through each hydraulic damping mechanism is large. Therefore, each hydraulic cylinder exerts a large damping force for suppressing rolling of the vehicle body. On the other hand, in the case where extensions and contractions of respective hydraulic cylinders are in the same phase, the amount of hydraulic oil entering or exiting each accumulator is small and the spring reaction force of each accumulator is small. The amount of hydraulic oil passing through each hydraulic damping mechanism is small. Therefore, when respective hydraulic cylinders extend and contract in the same phase, the damping force generated by each hydraulic cylinder is smaller compared to the case where extensions and contractions of respective hydraulic cylinders are opposite in phase. Vibrations of wheels caused by road surface irregularities or the like can be prevented from being transmitted to the vehicle body.

### SUMMARY OF INVENTION

Although the above-mentioned suspension apparatus can suppress the rolling of the vehicle body, the above-mentioned suspension apparatus includes four hydraulic damping mechanisms provided in the oil passages (two of which are provided in the first oil passage and the remaining two are provided in the second oil passage) and two hydraulic damping mechanisms provided in the accumulators. In other words, the above-mentioned suspension apparatus includes a total of six hydraulic damping mechanisms.

Respective hydraulic damping mechanisms are constituted by a plurality of valve groups. The conventional suspension apparatus including six hydraulic damping mechanisms requires numerous valves. Therefore, the entire system is large in size and high in cost.

The present invention intends to provide a suspension apparatus that is compact and can reduce the cost.

According to one aspect of the present invention, a suspension apparatus includes a first damper and a second damper each including a cylinder and a piston slidably inserted in the cylinder in such a way as to define an extension-side chamber and a contraction-side chamber in the cylinder; a first flow path allowing the extension-side chamber of the first damper to communicate with the contraction-side chamber of the second damper; a second flow path allowing the contraction-side chamber of the first damper to communicate with the extension-side chamber of the second damper; a first accumulator connected to the first flow path; a second accumulator connected to the second flow path; a first extension-side damping valve provided in the first flow path, the first extension-side damping valve being configured to impart resistance to a flow of fluid from the extension-side chamber of the first damper to the contraction-side chamber of the second damper; a first contraction-side damping valve provided in the first flow path in parallel with the first extension-side damping valve, the first contraction-side damping valve being configured to impart resistance to the flow of fluid from the contraction-side chamber of the second damper to the extension-side chamber of the first damper; a second extension-side damping valve provided in the second flow path, the second extension-side damping valve being configured to impart resistance to the flow of fluid from the extension-side chamber of the second damper to the contraction-side chamber of the first damper; a second contraction-side damping valve provided in the second flow path in parallel with the second extension-side damping valve, the second contraction-side damping valve being configured to impart resistance to the flow of fluid from the contraction-side chamber of the first damper to the extension-side chamber of the second damper; a first damping valve configured to impart resistance to the flow of fluid from the first flow path to the first accumulator; a first check valve disposed in parallel with the first damping valve in such a way as to enable fluid to flow only from the first accumulator to the first flow path; a second damping valve configured to impart resistance to the flow of fluid from the second flow path to the second accumulator; and a second check valve disposed in parallel with the second damping valve in such a way as to enable fluid to flow only from the second accumulator to the second flow path.

### BRIEF DESCRIPTION OF DRAWINGS

FIG. 1 is a circuit diagram of a suspension apparatus according to a first embodiment; and
FIG. 2 is a circuit diagram of a suspension apparatus according to a second embodiment.

### DESCRIPTION OF EMBODIMENTS

Hereinafter, some embodiments of the present invention will be described in detail below with reference to attached drawings.

### <First Embodiment>

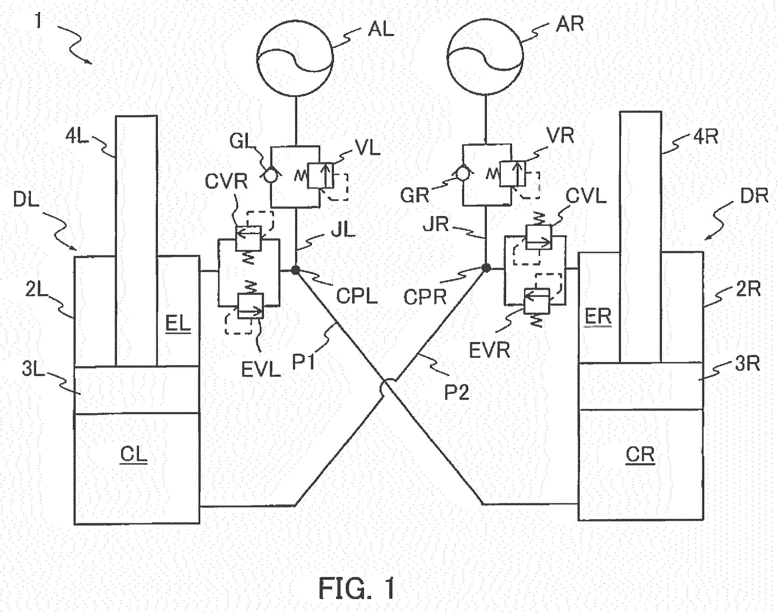

A suspension apparatus 1 according to the first embodiment, as illustrated in FIG. 1, includes a first damper DL and a second damper DR, a first flow path P1 connecting an extension-side chamber EL of the first damper DL and a contraction-side chamber CR of the second damper DR, a second flow path P2 connecting a contraction-side chamber CL of the first damper DL and an extension-side chamber ER of the second damper DR, a first accumulator AL connected to the first flow path P1, a second accumulator AR connected to the second flow path P2, a first extension-side damping valve EVL and a first contraction-side damping valve CVR provided in parallel with each other in the first flow path P1, a second extension-side damping valve EVR and a second contraction-side damping valve CVL provided in parallel with each other in the second flow path P2, a first damping valve VL and a first check valve GL provided in parallel with each other between the first flow path P1 and the first accumulator AL, and a second damping valve VR and a second check valve GR provided in parallel with each other between the second flow path P2 and the second accumulator AR. The suspension apparatus 1 is, for example, used for a four-wheeled vehicle in a state where the first damper DL is mounted between a front left wheel and a vehicle body and the second damper DR is mounted between a front right wheel and the vehicle body.

As illustrated in FIG. 1, the first damper DL includes a cylindrical cylinder 2L, a piston 3L slidably inserted in the cylinder 2L, and a piston rod 4L connected to the piston 3L. The second damper DR includes a cylindrical cylinder 2R, a piston 3R slidably inserted in the cylinder 2R, and a piston rod 4R connected to the piston 3R. Respective cylinders 2L and 2R are filled with hydraulic operating fluid, such as hydraulic oil, in an oil-tight state. The piston 3L defines the extension-side chamber EL and the contraction-side chamber CL in the inner space of the cylinder 2L. The piston 3R defines the extension-side chamber ER and the contraction-side chamber CR in the inner space of the cylinder 2R. The hydraulic operating fluid is not limited to hydraulic oil and can be any other fluid, such as water, aqueous solution, electrorheological fluid, or magnetorheological fluid. In addition, the dampers DL and DR are single-rod hydraulic dampers or can be double-rod hydraulic dampers including piston rods provided on both ends of respective pistons 3L and 3R.

The first flow path P1 and the second flow path P2 connect the first damper DL and the second damper DR with each other. More specifically, the extension-side chamber EL of the first damper DL communicates with the contraction-side chamber CR of the second damper DR through the first flow path P1. The contraction-side chamber CL of the first damper DL communicates with the extension-side chamber ER of the second damper DR through the second flow path P2. In other words, the first flow path P1 and the second flow path P2 form an X-shaped arrangement for connecting the extension-side chambers EL and ER and the contraction-side chambers CL and CR between the first damper DL and the second damper DR.

The first accumulator AL is connected to the first flow path P1 through a first connection path JL connected to the midway of the first flow path P1. In the following description, the portion of the first flow path P1 connected to the first accumulator AL through the first connection path JL is referred to as "connecting point CPL". The first connection path JL is provided with the first damping valve VL that can impart resistance to the flow of hydraulic oil from the first flow path P1 to the first accumulator AL. In the present embodiment, the first damping valve VL is a relief valve (see FIG. 1) or can be any other valve, such as a throttle, that enables the hydraulic oil to flow in both directions. In addition, as illustrated in FIG. 1, the first connection path JL is provided with the first check valve GL arranged in parallel with the first damping valve VL. The first check valve GL enables the hydraulic oil to flow only from the first accumulator AL to the first flow path P1. Accordingly, when the hydraulic oil flows from the first flow path P1 to the first accumulator AL, the first check valve GL closes to cause the hydraulic oil to pass through the first damping valve VL. Therefore, the first damping valve VL imparts resistance to the flow of the hydraulic oil. To the contrary, when the hydraulic oil flows from the first accumulator AL to the first flow path P1, the first check valve GL opens to let the hydraulic oil pass through the first check valve GL. Therefore, under slight resistance by the first check valve GL, the hydraulic oil passes through the first check valve GL.

The second accumulator AR is connected to the second flow path P2 through a second connection path JR connected to the midway of the second flow path P2. In the following description, the portion of the second flow path P2 connected to the second accumulator AR through the second connection path JR is referred to as "connecting point CPR". The second damping valve VR, which imparts resistance to the flow of hydraulic oil from the second flow path P2 to the second accumulator AR, is provided in the second connection path JR. Similar to the first damping valve VL, the second damping valve VR is a relief valve or can be any other valve, such as the throttle, that enables the hydraulic oil to flow in both directions. In addition, the second check valve GR is provided in parallel with the second damping valve VR in the second connection path JR, as illustrated in FIG. 1. The second check valve GR enables the hydraulic oil to flow only from the second accumulator AR to the second flow path P2. Accordingly, when the hydraulic oil flows from the second flow path P2 to the second accumulator AR, the second check valve GR closes to cause the hydraulic oil to pass through the second damping valve VR. Therefore, the second damping valve VR imparts resistance to the flow of hydraulic oil. To the contrary, when the hydraulic oil flows from the second accumulator AR to the second flow path P2, the second check valve GR opens to let the hydraulic oil pass through the second check valve GR. Therefore, under slight resistance by the second check valve GR, the hydraulic oil passes through the second check valve GR.

In addition, the first extension-side damping valve EVL and the first contraction-side damping valve CVR are provided in parallel with each other between the connecting point CPL of the first flow path P1 and the extension-side chamber EL of the first damper DL. The first extension-side damping valve EVL imparts resistance to the flow of hydraulic oil from the extension-side chamber EL of the first damper DL to the contraction-side chamber CR of the second damper DR. The first contraction-side damping valve CVR imparts resistance to the flow of hydraulic oil from the contraction-side chamber CR of the second damper DR to the extension-side chamber EL of the first damper DL. The first extension-side damping valve EVL and the first contraction-side damping valve CVR are relief valves, in the present embodiment. Accordingly, when the hydraulic oil flows from the extension-side chamber EL to the contraction-side chamber CR, the first extension-side damping valve EVL opens and the first extension-side damping valve EVL imparts resistance to the flow of hydraulic oil. To the contrary, when the hydraulic oil flows from the contraction-side chamber CR to the extension-side chamber EL, the first contraction-side damping valve CVR opens and the first contraction-side damping valve CVR imparts resistance to the flow of hydraulic oil. The first extension-side damping valve EVL and the first contraction-side damping valve CVR can be any other valve, such as the throttle, that enables the hydraulic oil to flow in both directions.

On the other hand, the second extension-side damping valve EVR and the second contraction-side damping valve CVL are provided in parallel with each other between the connecting point CPR of the second flow path P2 and the extension-side chamber ER of the second damper DR. The second extension-side damping valve EVR imparts resistance to the flow of hydraulic oil from the extension-side chamber ER of the second damper DR to the contraction-side chamber CL of the first damper DL. The second contraction-side damping valve CVL imparts resistance to the flow of hydraulic oil from the contraction-side chamber CL of the first damper DL to the extension-side chamber ER of the second damper DR. The second extension-side damping valve EVR and the second contraction-side damping valve CVL are relief valves, in the present embodiment. Accordingly, when the hydraulic oil flows from the extension-side chamber ER to the contraction-side chamber CL, the second extension-side damping valve EVR opens and the second extension-side damping valve EVR imparts resistance to the flow of hydraulic oil. To the contrary, when the hydraulic oil flows from the contraction-side chamber CL to the extension-side chamber ER, the second contraction-side damping valve CVL opens and the second contraction-side damping valve CVL imparts resistance to the flow of hydraulic oil. The second extension-side damping valve EVR and the second contraction-side damping valve CVL can be any other valve, such as the throttle, that enables the hydraulic oil to flow in both directions.

The suspension apparatus 1 having the above-mentioned configuration operates in the following manner. First, it is assumed that extensions and contractions of the first damper DL and the second damper DR are in the same phase. In other words, displacement of the pistons 3L and 3R with respect to the cylinders 2L and 2R is in the same phase in the first damper DL and the second damper DR.

When both of the first damper DL and the second damper DR extend at the same speed, the volumes of the extension-side chambers EL and ER decrease and the volumes of the contraction-side chambers CL and CR increase. The hydraulic oil in the extension-side chamber EL of the first damper DL flows out to the first flow path P1, passes through the first extension-side damping valve EVL, and flows into the contraction-side chamber CR of the second damper DR. In addition, the hydraulic oil in the extension-side chamber ER of the second damper DR flows out to the second flow path P2, passes through the second extension-side damping valve EVR, and flows into the contraction-side chamber CL of the first damper DL.

In the first damper DL and the second damper DR, the increase in volume of the contraction-side chambers CL and CR is greater than the reduction in volume of the extension-side chambers EL and ER by an amount comparable to the volume of the piston rods 4L and 4R exiting the cylinders 2L and 2R. Therefore, if only the hydraulic oil having flown out from the extension-side chambers EL and ER flows into the contraction-side chambers CL and CR, there will be lack of hydraulic oil in the contraction-side chambers CL and CR. In the suspension apparatus 1, hydraulic oil comparable to the volume that becomes insufficient in the contraction-side chamber CL is supplied from the second accumulator AR via the second check valve GR. Further, hydraulic oil comparable to the volume that becomes insufficient in the contraction-side chamber CR is supplied from the first accumulator AL via the first check valve GL.

When hydraulic oil is supplied from the second accumulator AR to the contraction-side chamber CL, the hydraulic oil passes through the second check valve GR. Therefore, substantially no resistance is imparted to the flow of hydraulic oil. The pressure in the contraction-side chamber CL is substantially identical to that of the second accumulator AR. When hydraulic oil is supplied from the first accumulator AL to the contraction-side chamber CR, the hydraulic oil passes through the first check valve GL. Therefore, substantially no resistance is imparted to the flow of hydraulic oil. The pressure in the contraction-side chamber CR is substantially identical to that of the first accumulator AL. Since the hydraulic oil passes through the first extension-side damping valve EVL and the second extension-side damping valve EVR, a difference in pressure is caused between the extension-side chamber EL and the contraction-side chamber CL and also a difference in pressure is caused between the extension-side chamber ER and the contraction-side chamber CR. Accordingly, when both of the first damper DL and the second damper DR extend at the same speed, the first extension-side damping valve EVL and the second extension-side damping valve EVR exert a damping force for suppressing extension motions of the first damper DL and the second damper DR.

To the contrary, when both of the first damper DL and the second damper DR contract at the same speed, in the first damper DL and the second damper DR, the volumes of the extension-side chambers EL and ER increase and the volumes of the contraction-side chambers CL and CR decrease. The hydraulic oil in the contraction-side chamber CL of the first damper DL flows out to the second flow path P2, passes through the second contraction-side damping valve CVL, and flows into the extension-side chamber ER of the second damper DR. In addition, the hydraulic oil in the contraction-side chamber CR of the second damper DR flows out to the first flow path P1, passes through the first contraction-side damping valve CVR, and flows into the extension-side chamber EL of the first damper DL.

In the first damper DL and the second damper DR, the reduction in volume of the contraction-side chambers CL and CR is greater than the increase in volume of the extension-side chambers EL and ER by an amount comparable to the volume of the piston rods 4L and 4R entering the cylinders 2L and 2R. Therefore, if the hydraulic oil having flown out from the contraction-side chambers CL and CR flows into only the extension-side chambers EL and ER, hydraulic oil becomes excessive in the contraction-side chambers CL and CR. In the suspension apparatus 1, the hydraulic oil comparable to the volume that becomes excessive in the contraction-side chamber CL flows into the second accumulator AR via the second damping valve VR. Further, in the suspension apparatus 1, the hydraulic oil comparable to the volume that becomes excessive in the contraction-side chamber CR flows into the first accumulator AL via the first damping valve VL.

When both of the first damper DL and the second damper DR contract at the same speed, the hydraulic oil in the contraction-side chamber CL passes through the second damping valve VR to move into the second accumulator AR and also moves into the extension-side chamber ER via the second contraction-side damping valve CVL. The hydraulic oil in the contraction-side chamber CR passes through the first damping valve VL to move into the first accumulator AL and also moves into the extension-side chamber EL via the first contraction-side damping valve CVR. Thus, a difference in pressure is caused between the contraction-side chamber CL and the extension-side chamber EL, and also a pressure difference is caused between the contraction-side chamber CR and the extension-side chamber ER. Accordingly, when both of the first damper DL and the second damper DR contract at the same speed, the first damper DL and the second damper DR exert a damping force for suppressing contraction motions by the second contraction-side damping valve CVL, the second damping valve VR, the first contraction-side damping valve CVR, and the first damping valve VL.

Next, it is assumed that extensions and contractions of the first damper DL and the second damper DR are opposite in phase. In other words, displacement of the pistons 3L and 3R with respect to the cylinders 2L and 2R is completely opposite in phase in the first damper DL and the second damper DR.

When the first damper DL extends and the second damper DR contracts oppositely at the same speed, the volume of the extension-side chamber EL decreases and the volume of the contraction-side chamber CL increases in the first damper DL, while the volume of the extension-side chamber ER increases and the volume of the contraction-side chamber CR decreases in the second damper DR.

The extension-side chamber EL of the first damper DL and the contraction-side chamber CR of the second damper DR are connected to each other through the first flow path P1, and the volumes of the extension-side chamber EL and the contraction-side chamber CR decrease together. Therefore, the hydraulic oil in the extension-side chamber EL and the contraction-side chamber CR flows into the first accumulator AL through the first flow path P1. More specifically, the hydraulic oil having flown out from the extension-side chamber EL of the first damper DL flows into the first accumulator AL via the first extension-side damping valve EVL and the first damping valve VL. In addition, the hydraulic oil having flown out from the contraction-side chamber CR of the second damper DR flows into the first accumulator AL via the first damping valve VL.

On the other hand, the contraction-side chamber CL of the first damper DL and the extension-side chamber ER of the second damper DR are connected to each other through the second flow path P2, and the volumes of the contraction-side chamber CL and the extension-side chamber ER increase together. Therefore, the hydraulic oil is supplied from the second accumulator AR to the contraction-side chamber CL and the extension-side chamber ER. More specifically, the hydraulic oil is supplied from the second accumulator AR to the contraction-side chamber CL of the first damper DL via the second check valve GR. The hydraulic oil is supplied from the second accumulator AR to the extension-side chamber ER of the second damper DR via the second check valve GR and the second contraction-side damping valve CVL. Substantially no resistance is imparted to the flow of hydraulic oil from the second accumulator AR to the contraction-side chamber CL of the first damper DL. Therefore, the pressure of the contraction-side chamber CL is substantially identical to that of the second accumulator AR. The second contraction-side damping valve CVL imparts resistance to the flow of hydraulic oil from the second accumulator AR to the extension-side chamber ER of the second damper DR. Therefore, the pressure of the extension-side chamber ER becomes lower than the pressure of the second accumulator AR.

Thus, a large difference in pressure is caused between the contraction-side chamber CL and the extension-side chamber EL, and also a large difference in pressure is caused between the contraction-side chamber CR and the extension-side chamber ER. Accordingly, when the first damper DL extends and the second damper DR contracts at the same speed, the first damper DL and the second damper DR exert a damping force for suppressing extension and contraction motions of the first damper DL and the second damper DR by the first extension-side damping valve EVL, the first damping valve VL, and the second contraction-side damping valve CVL.

Further, when the first damper DL extends and the second damper DR contracts at the same speed, the amount of hydraulic oil entering or exiting the first accumulator AL and the second accumulator AR is greater compared to the case where extensions and contractions of the first damper DL and the second damper DR are in the same phase.

Therefore, when the first damper DL extends and the second damper DR contracts at the same speed, the pressure in the first accumulator AL becomes higher compared to the case where both of the first damper DL and the second damper DR extend and contract in the same phase. In addition, the hydraulic oil having flown out from the extension-side chamber EL of the first damper DL passes through the first extension-side damping valve EVL and the first damping valve VL, and the hydraulic oil flowing into the extension-side chamber ER of the second damper DR passes through the second contraction-side damping valve CVL. Accordingly, the pressure difference between the extension-side chamber EL and the contraction-side chamber CL and the pressure difference between the extension-side chamber ER and the contraction-side chamber CR become larger compared to the case where extensions and contractions are in the same phase.

Accordingly, when the first damper DL extends and the second damper DR contracts at the same speed, the first damper DL and the second damper DR exert a large damping force compared to the case where both of the first damper DL and the second damper DR extend and contract in the same phase.

To the contrary, when the first damper DL contracts and the second damper DR extends at the same speed, the volume of the contraction-side chamber CL decreases and the volume of the extension-side chamber EL increases in the first damper DL, while the volume of the contraction-side chamber CR increases and the volume of the extension-side chamber ER decreases in the second damper DR.

The contraction-side chamber CL of the first damper DL and the extension-side chamber ER of the second damper DR are connected to each other through the second flow path P2, and the volumes of the contraction-side chamber CL and the extension-side chamber ER decrease together. Therefore, the hydraulic oil in the contraction-side chamber CL and the extension-side chamber ER flows into the second accumulator AR through the second flow path P2. More specifically, the hydraulic oil having flown out from the contraction-side chamber CL of the first damper DL flows into the second accumulator AR via the second damping valve VR. In addition, the hydraulic oil having flown out from the extension-side chamber ER of the second damper DR flows into the second accumulator AR via the second extension-side damping valve EVR and the second damping valve VR.

On the other hand, the extension-side chamber EL of the first damper DL and the contraction-side chamber CR of the second damper DR are connected to each other through the first flow path P1, and the volumes of the extension-side chamber EL and the contraction-side chamber CR increase together. Therefore, the hydraulic oil is supplied from the first accumulator AL to the extension-side chamber EL and the contraction-side chamber CR. More specifically, the hydraulic oil is supplied from the first accumulator AL to the extension-side chamber EL of the first damper DL via the first check valve GL and the first contraction-side damping valve CVR. The hydraulic oil is supplied from the first accumulator AL to the contraction-side chamber CR of the second damper DR through the first check valve GL. Substantially no resistance is imparted to the flow of hydraulic oil from the first accumulator AL to the contraction-side chamber CR of the second damper DR. Therefore, the pressure of the contraction-side chamber CR is substantially identical to that of the first accumulator AL. Since the first contraction-side damping valve CVR imparts resistance to the flow of hydraulic oil from the first accumulator AL to the extension-side chamber EL of the first damper DL, the pressure of the extension-side chamber EL becomes lower than the pressure of the first accumulator AL.

Thus, a large difference in pressure is caused between the contraction-side chamber CL and the extension-side chamber EL, and also a large difference in pressure is caused between the contraction-side chamber CR and the extension-side chamber ER. Accordingly, when the first damper DL contracts and the second damper DR extends at the same speed, the first damper DL and the second damper DR exert a damping force for suppressing extension and contraction motions of the first damper DL and the second damper DR by the second extension-side damping valve EVR, the second damping valve VR, and the first contraction-side damping valve CVR.

Further, when the first damper DL contracts and the second damper DR extends at the same speed, the amount of hydraulic oil entering or exiting the first accumulator AL and the second accumulator AR is greater compared to the case where extensions and contractions of the first damper DL and the second damper DR are in the same phase.

Therefore, when the first damper DL contracts and the second damper DR extends at the same speed, the pressure in the second accumulator AR becomes higher compared to the case where both of the first damper DL and the second damper DR extend and contract in the same phase. In addition, the hydraulic oil having flown out from the extension-side chamber ER of the second damper DR passes through the second extension-side damping valve EVR and the second damping valve VR, and the hydraulic oil flowing into the extension-side chamber EL of the first damper DL passes through the first contraction-side damping valve CVR. Accordingly, the pressure difference between the extension-side chamber EL and the contraction-side chamber CL and the pressure difference between the extension-side chamber ER and the contraction-side chamber CR become larger compared to the case where extensions and contractions are in the same phase.

Accordingly, when the first damper DL contracts and the second damper DR extends at the same speed, the first damper DL and the second damper DR exert a large damping force compared to the case where both of the first damper DL and the second damper DR extend and contract in the same phase.

In the above description, the first damper DL and the second damper DR extend and contract in both the same and opposite phases, and the pistons move at the same speed. The damping force of the first damper DL and the second damper DR changes depending on the amount of hydraulic oil supplied to or discharged from respective accumulators AL and AR. Accordingly, when only one of the first damper DL and the second damper DR extends and contracts, and when extensions and contractions of the first damper DL and the second damper DR are out of phase, the first damper DL and the second damper DR exert a damping force according to the amount of hydraulic oil supplied to or discharged from respective accumulators AL and AR. Accordingly, in such a case, the first damper DL and the second damper DR generates the damping force between the damping force obtained when the extensions and contractions are in the same phase and the damping force obtained when the extensions and contractions are opposite in phase.

As mentioned above, the damping force generated by the first damper DL and the second damper DR when extensions and contractions of the first damper DL and the second damper DR are opposite in phase is larger than the damping force generated by the first damper DL and the second damper DR when extensions and contractions of the first damper DL and the second damper DR are in the same phase. Accordingly, the suspension apparatus 1, when the vehicle body rolls, can generate a larger damping force to effectively suppress the rolling of the vehicle body and, when the vehicle body moves in the up-and-down direction, can generate a smaller damping force to improve the ride quality.

The suspension apparatus 1 includes the first extension-side damping valve EVL and the first contraction-side damping valve CVR provided in parallel with each other in the first flow path P1 connecting the extension-side chamber EL of the first damper DL and the contraction-side chamber CR of the second damper DR, and includes the second extension-side damping valve EVR and the second contraction-side damping valve CVL provided in parallel with each other in the second flow path P2 connecting the contraction-side chamber CL of the first damper DL and the extension-side chamber ER of the second damper DR. Further, the suspension apparatus 1 includes the first damping valve VL and the first check valve GL provided in parallel with each other between the first flow path P1 and the first accumulator AL, and includes the second damping valve VR and the second check valve GR provided in parallel with each other between the second flow path P2 and the second accumulator AR. Configuring the suspension apparatus 1 as mentioned above can obtain a large damping force for effectively suppressing the rolling of the vehicle body when extensions and contractions of the first damper DL and the second damper DR are opposite in phase.

The suspension apparatus 1 only requires the first extension-side damping valve EVL, the first contraction-side damping valve CVR, the second extension-side damping valve EVR, the second contraction-side damping valve CVL, the first damping valve VL, the first check valve GL, the second damping valve VR, and the second check valve GR as the valves. Accordingly, the number of valves to be installed can be reduced, the entire system can be downsized, and the cost can be reduced. In other words, the suspension apparatus 1 having the above-mentioned configuration is not only capable of obtaining a large damping force for effectively suppressing the rolling of the vehicle body when extensions and contractions of the first damper DL and the second damper DR are opposite in phase but also capable of reducing the number of valves to be installed.

In addition, the first check valve GL is provided in parallel with the first damping valve VL, and the second check valve GR is provided in parallel with the second damping valve VR. Therefore, when hydraulic oil is supplied from the first accumulator AL and the second accumulator AR to the first damper DL or the second damper DR, both the first check valve GL and the second check valve GR open so that the first damping valve VL and the second damping valve VR impart no resistance. Accordingly, the hydraulic oil can be speedily supplied to the first damper DL or the second damper DR. The pressure in each of the extension-side chambers EL and ER and the contraction-side chambers CL and CR can be prevented from becoming equal to or lower than the atmospheric pressure, without requiring setting higher pressures for the first accumulator AL and the second accumulator AR.

### <Second embodiment>

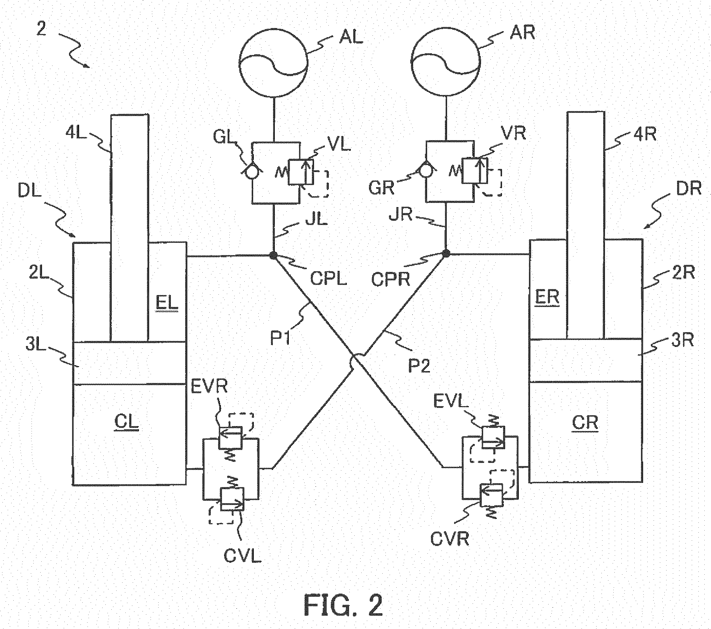

A suspension apparatus 2 according to the second embodiment, as illustrated in FIG. 2, is different from the suspension apparatus 1 according to the first embodiment in installation positions of the first extension-side damping valve EVL, the first contraction-side damping valve CVR, the second extension-side damping valve EVR, and the second contraction-side damping valve CVL.

More specifically, in the suspension apparatus 2, the first extension-side damping valve EVL and the first contraction-side damping valve CVR are provided in parallel with each other between the connecting point CPL of the first flow path P1 and the contraction-side chamber CR of the second damper DR. In addition, in the suspension apparatus 2, the second extension-side damping valve EVR and the second contraction-side damping valve CVL are provided in parallel with each other between the connecting point CPR of the second flow path P2 and the contraction-side chamber CL of the first damper DL. The suspension apparatus 2 according to the second embodiment is substantially similar to the suspension apparatus 2 according to the first embodiment in the remaining configuration.

Exemplary operations of the suspension apparatus 2 having the above-mentioned configuration will be described below. First, when extensions and contractions of the first damper DL and the second damper DR are in the same phase, namely when displacement of the pistons 3L and 3R with respect to the cylinders 2L and 2R is in the same phase in the first damper DL and the second damper DR, the suspension apparatus 2 operates in the following manner.

When both of the first damper DL and the second damper DR extend at the same speed, the volumes of the extension-side chambers EL and ER decrease and the volumes of the contraction-side chambers CL and CR increase in the first damper DL and the second damper DR. The hydraulic oil in the extension-side chamber EL of the first damper DL flows out to the first flow path P1, passes through the first extension-side damping valve EVL, and flows into the contraction-side chamber CR of the second damper DR. In addition, the hydraulic oil in the extension-side chamber ER of the second damper DR flows out to the second flow path P2, passes through the second extension-side damping valve EVR, and flows into the contraction-side chamber CL of the first damper DL.

In the first damper DL and the second damper DR, the increase in volume of the contraction-side chambers CL and CR is greater than the reduction in volume of the extension-side chambers EL and ER by an amount equivalent to the volume of the piston rods 4L and 4R exiting the cylinders 2L and 2R. Therefore, if only the hydraulic oil having flown out from the extension-side chambers EL and ER flows into the contraction-side chambers CL and CR, there will be lack of hydraulic oil in the contraction-side chambers CL and CR. In the suspension apparatus 2hydraulic oil comparable to the volume that becomes insufficient in the contraction-side chamber CL is supplied is supplied from the second accumulator AR via the second check valve GR and the second extension-side damping valve EVR. Further, hydraulic oil comparable to the volume that becomes insufficient in the contraction-side chamber CR is supplied is supplied from the first accumulator AL via the first check valve GL and the first extension-side damping valve EVL.

The pressure of the extension-side chamber EL becomes substantially identical to the pressure of the first accumulator AL. The pressure of the extension-side chamber ER becomes substantially identical to the pressure of the second accumulator AR. Further, the first extension-side damping valve EVL imparts resistance to the flow of hydraulic oil from the extension-side chamber EL and the first accumulator AL to the contraction-side chamber CR. The second extension-side damping valve EVR imparts resistance to the flow of hydraulic oil from the extension-side chamber ER and the second accumulator AR to the contraction-side chamber CL. Accordingly, a difference in pressure is caused between the extension-side chamber EL and the contraction-side chamber CL, and also a difference in pressure is caused between the extension-side chamber ER and the contraction-side chamber CR. When both of the first damper DL and the second damper DR extend at the same speed, the first extension-side damping valve EVL and the second extension-side damping valve EVR cooperate to exert a damping force for suppressing extension motions of the first damper DL and the second damper DR.

To the contrary, when both of the first damper DL and the second damper DR contract at the same speed, the volumes of the extension-side chambers EL and ER increase and the volumes of the contraction-side chambers CL and CR decrease. The hydraulic oil in the contraction-side chamber CL of the first damper DL flows out to the second flow path P2, passes through the second contraction-side damping valve CVL, and flows into the extension-side chamber ER of the second damper DR. In addition, the hydraulic oil in the contraction-side chamber CR of the second damper DR flows out to the first flow path P1, passes through the first contraction-side damping valve CVR, and flows into the extension-side chamber EL of the first damper DL.

In the first damper DL and the second damper DR, the reduction in volume of the contraction-side chambers CL and CR is greater than the increase in volume of the extension-side chambers EL and ER by an amount equivalent to the volume of the piston rods 4L and 4R entering the cylinders 2L and 2R. Therefore, if the hydraulic oil having flown out from the contraction-side chambers CL and CR flows into only the extension-side chambers EL and ER, there will be surplus of hydraulic oil in the contraction-side chambers CL and CR. In the suspension apparatus 2, the hydraulic oil comparable to the volume that becomes excessive in the contraction-side chamber CL flows into the second accumulator AR via the second damping valve VR. Further, the hydraulic oil comparable to the volume that becomes excessive in the contraction-side chamber CR flows into the first accumulator AL via the first damping valve VL.

When both of the first damper DL and the second damper DR contract at the same speed, the hydraulic oil in the contraction-side chamber CL passes through the second contraction-side damping valve CVL and the second damping valve VR and moves into the second accumulator AR, and further moves into the extension-side chamber ER via the second contraction-side damping valve CVL. In addition, the hydraulic oil in the contraction-side chamber CR passes through the first contraction-side damping valve CVR and the first damping valve VL and moves into the first accumulator AL, and further moves into the extension-side chamber EL via the first contraction-side damping valve CVR. Thus, a difference in pressure is caused between the contraction-side chamber CL and the extension-side chamber EL, and also a difference in pressure is caused between the contraction-side chamber CR and the extension-side chamber ER. Accordingly, when both of the first damper DL and the second damper DR contract at the same speed, the second contraction-side damping valve CVL, the second damping valve VR, the first contraction-side damping valve CVR, and the first damping valve VL cooperate to exert a damping force for suppressing contraction motions of the first damper DL and the second damper DR.

Next, it is assumed that extensions and contractions of the first damper DL and the second damper DR are opposite in phase. In other words, displacement of the pistons 3L and 3R with respect to the cylinders 2L and 2R is completely opposite in phase in the first damper DL and the second damper DR.

When the first damper DL extends and the second damper DR contracts oppositely at the same speed, the volume of the extension-side chamber EL decreases and the volume of the contraction-side chamber CL increases in the first damper DL, while the volume of the extension-side chamber ER increases and the volume of the contraction-side chamber CR decreases in the second damper DR.

The extension-side chamber EL of the first damper DL and the contraction-side chamber CR of the second damper DR are connected to each other through the first flow path P1, and the volumes of the extension-side chamber EL and the contraction-side chamber CR decrease together. Therefore, the hydraulic oil in the extension-side chamber EL and the contraction-side chamber CR flows into the first accumulator AL through the first flow path P1. More specifically, the hydraulic oil having flown out from the extension-side chamber EL of the first damper DL flows into the first accumulator AL via the first damping valve VL. The hydraulic oil having flown out from the contraction-side chamber CR of the second damper DR flows into the first accumulator AL via the first contraction-side damping valve CVR and the first damping valve VL.

On the other hand, the contraction-side chamber CL of the first damper DL and the extension-side chamber ER of the second damper DR are connected to each other through the second flow path P2, and the volumes of the contraction-side chamber CL and the extension-side chamber ER increase together. Therefore, the hydraulic oil is supplied from the second accumulator AR to the contraction-side chamber CL and the extension-side chamber ER. More specifically, the hydraulic oil is supplied from the second accumulator AR to the contraction-side chamber CL of the first damper DL via the second check valve GR and the second extension-side damping valve EVR. The hydraulic oil is supplied from the second accumulator AR to the extension-side chamber ER of the second damper DR via the second check valve GR. Substantially no resistance is imparted to the flow of hydraulic oil from the second accumulator AR to the extension-side chamber ER of the second damper DR. Therefore, the pressure of the extension-side chamber ER is substantially identical to that of the second accumulator AR. The second extension-side damping valve EVR imparts resistance to the flow of hydraulic oil from the second accumulator AR to the contraction-side chamber CL of the first damper DL. Therefore, the pressure of the contraction-side chamber CL becomes lower than the pressure of the second accumulator AR.

Thus, a large difference in pressure is caused between the contraction-side chamber CL and the extension-side chamber EL, and also a large difference in pressure is caused between the contraction-side chamber CR and the extension-side chamber ER. Accordingly, when the first damper DL extends and the second damper DR contracts at the same speed, the first contraction-side damping valve CVR, the first damping valve VL, and the second extension-side damping valve EVR cooperate to exert a damping force for suppressing extension and contraction motions of the first damper DL and the second damper DR.

Further, when the first damper DL extends and the second damper DR contracts at the same speed, the amount of hydraulic oil entering or exiting the first accumulator AL and the second accumulator AR is greater compared to the case where extensions and contractions of the first damper DL and the second damper DR are in the same phase.

Therefore, when the first damper DL extends and the second damper DR contracts at the same speed, the pressure in the first accumulator AL becomes higher compared to the case where both of the first damper DL and the second damper DR extend and contract in the same phase. In addition, the hydraulic oil having flown out from the contraction-side chamber CR of the second damper DR passes through the first contraction-side damping valve CVR and the first damping valve VL, and the hydraulic oil flowing into the contraction-side chamber CL of the first damper DL passes through the second extension-side damping valve EVR. Accordingly, the pressure difference between the extension-side chamber EL and the contraction-side chamber CL and the pressure difference between the extension-side chamber ER and the contraction-side chamber CR become larger compared to the case where extensions and contractions are in the same phase.

Accordingly, when the first damper DL extends and the second damper DR contracts at the same speed, the first damper DL and the second damper DR exert a larger damping force compared to the case where both of the first damper DL and the second damper DR extend and contract in the same phase.

To the contrary, when the first damper DL contracts and the second damper DR extends at the same speed, the volume of the contraction-side chamber CL decreases and the volume of the extension-side chamber EL increases in the first damper DL, while the volume of the contraction-side chamber CR increases and the volume of the extension-side chamber ER decreases in the second damper DR.

The contraction-side chamber CL of the first damper DL and the extension-side chamber ER of the second damper DR are connected to each other through the second flow path P2, and the volumes of the contraction-side chamber CL and the extension-side chamber ER decrease together. Therefore, the hydraulic oil in the contraction-side chamber CL and the extension-side chamber ER flows into the second accumulator AR through the second flow path P2. More specifically, the hydraulic oil having flown out from the contraction-side chamber CL of the first damper DL flows into the second accumulator AR via the second contraction-side damping valve CVL and the second damping valve VR. In addition, the hydraulic oil having flown out from the extension-side chamber ER of the second damper DR flows into the second accumulator AR via the second damping valve VR.

On the other hand, the extension-side chamber EL of the first damper DL and the contraction-side chamber CR of the second damper DR are connected to each other through the first flow path P1, and the volumes of the extension-side chamber EL and the contraction-side chamber CR increase together. Therefore, the hydraulic oil is supplied from the first accumulator AL to the extension-side chamber EL and the contraction-side chamber CR. More specifically, the hydraulic oil is supplied from the first accumulator AL to the extension-side chamber EL of the first damper DL via the first check valve GL. The hydraulic oil is supplied from the first accumulator AL to the contraction-side chamber CR of the second damper DR via the first check valve GL and the first extension-side damping valve EVL. Since substantially no resistance is imparted to the flow of hydraulic oil from the first accumulator AL to the extension-side chamber EL of the first damper DL, the pressure of the extension-side chamber EL is substantially identical to that of the first accumulator AL. Since the first extension-side damping valve EVL imparts resistance to the flow of hydraulic oil from the first accumulator AL to the contraction-side chamber CR of the second damper DR, the pressure of the contraction-side chamber CR becomes lower than the pressure of the first accumulator AL.

This causes a large difference in pressure between the contraction-side chamber CL and the extension-side chamber EL and causes a large difference in pressure between the contraction-side chamber CR and the extension-side chamber ER. Accordingly, when the first damper DL contracts and the second damper DR extends at the same speed, the second contraction-side damping valve CVL, the second damping valve VR, and the first extension-side damping valve EVL cooperate to exert a damping force for suppressing extension and contraction motions of the first damper DL and the second damper DR.

Further, when the first damper DL contracts and the second damper DR extends at the same speed, the amount of hydraulic oil entering or exiting the first accumulator AL and the second accumulator AR is greater compared to the case where extensions and contractions of the first damper DL and the second damper DR are in the same phase.

Therefore, when the first damper DL contracts and the second damper DR extends at the same speed, the pressure in the second accumulator AR becomes higher compared to the case where both of the first damper DL and the second damper DR extend and contract in the same phase. In addition, the hydraulic oil having flown out from the contraction-side chamber CL of the first damper DL passes through the second contraction-side damping valve CVL and the second damping valve VR, and the hydraulic oil flowing into the contraction-side chamber CR of the second damper DR passes through the first extension-side damping valve EVL. Accordingly, the pressure difference between the extension-side chamber EL and the contraction-side chamber CL and the pressure difference between the extension-side chamber ER and the contraction-side chamber CR become larger compared to the case where extensions and contractions are in the same phase.

Accordingly, when the first damper DL contracts and the second damper DR extends at the same speed, the first damper DL and the second damper DR exert a larger damping force compared to the case where both of the first damper DL and the second damper DR extend and contract in the same phase.

In the above description, the first damper DL and the second damper DR extend and contract in both the same and opposite phases, and the pistons move at the same speed. The damping force of the first damper DL and the second damper DR changes depending on the amount of hydraulic oil supplied to or discharged from respective accumulators AL and AR. Accordingly, when only one of the first damper DL and the second damper DR extends and contracts, and when extensions and contractions of the first damper DL and the second damper DR are out of phase, the first damper DL and the second damper DR exert a damping force according to the amount of hydraulic oil supplied to or discharged from respective accumulators AL and AR. Accordingly, in such a case, the first damper DL and the second damper DR generates the damping force between the damping force obtained when the extensions and contractions are in the same phase and the damping force obtained when the extensions and contractions are opposite in phase.

As mentioned above, the damping force generated by the first damper DL and the second damper DR when extensions and contractions of the first damper DL and the second damper DR are opposite in phase is larger than the damping force generated by the first damper DL and the second damper DR when extensions and contractions of the first damper DL and the second damper DR are in the same phase. Accordingly, the suspension apparatus 2, when the vehicle body rolls, can generate a large damping force to effectively suppress the rolling of the vehicle body and, when the vehicle body moves in the up-and-down direction, can generate a smaller damping force to improve the ride quality in the vehicle.

The suspension apparatus 2 includes the first extension-side damping valve EVL and the first contraction-side damping valve CVR provided in parallel with each other in the first flow path P1 connecting the extension-side chamber EL of the first damper DL and the contraction-side chamber CR of the second damper DR, and includes the second extension-side damping valve EVR and the second contraction-side damping valve CVL provided in parallel with each other in the second flow path P2 connecting the contraction-side chamber CL of the first damper DL and the extension-side chamber ER of the second damper DR. Further, the suspension apparatus 2 includes the first damping valve VL and the first check valve GL provided in parallel with each other between the first flow path P1 and the first accumulator AL, and includes the second damping valve VR and the second check valve GR provided in parallel with each other between the second flow path P2 and the second accumulator AR. Similar to the suspension apparatus 1 according to the first embodiment, configuring the suspension apparatus 2 as mentioned above can obtain a large damping force for effectively suppressing the rolling of the vehicle body when extensions and contractions of the first damper DL and the second damper DR are opposite in phase.

The suspension apparatus 2 only requires the first extension-side damping valve EVL, the first contraction-side damping valve CVR, the second extension-side damping valve EVR, the second contraction-side damping valve CVL, the first damping valve VL, the first check valve GL, the second damping valve VR, and the second check valve GR as the valves. Accordingly, the number of valves to be installed can be reduced, the entire system can be downsized, and the cost can be reduced. In other words, the suspension apparatus 2 having the above-mentioned configuration is not only capable of obtaining a large damping force for effectively suppressing the rolling of the vehicle body when extensions and contractions of the first damper DL and the second damper DR are opposite in phase but also capable of reducing the number of valves to be installed.

In addition, the first check valve GL is provided in parallel with the first damping valve VL, and the second check valve GR is provided in parallel with the second damping valve VR. Therefore, when the hydraulic oil is supplied from the first accumulator AL and the second accumulator AR to the first damper DL or the second damper DR, the first check valve GL and the second check valve GR open so that the first damping valve VL and the second damping valve VR impart no resistance. Accordingly, the hydraulic oil can be speedily supplied to the first damper DL or the second damper DR. The pressure in each of the extension-side chambers EL and ER and the contraction-side chambers CL and CR can be prevented from becoming equal to or lower than the atmospheric pressure, without requiring setting higher pressures for the first accumulator AL and the second accumulator AR.

In the suspension apparatus 1 according to the first embodiment, as illustrated in FIG. 1, the first extension-side damping valve EVL and the first contraction-side damping valve CVR are provided in parallel with each other between the connecting point CPL of the first flow path P1 and the extension-side chamber EL of the first damper DL. Similarly, the second extension-side damping valve EVR and the second contraction-side damping valve CVL are provided in parallel with each other between the connecting point CPR of the second flow path P2 and the extension-side chamber ER of the second damper DR. When only the first damper DL contracts and the extension-side chamber EL becomes larger, the hydraulic oil is supplied from the first accumulator AL to the extension-side chamber EL. When only the second damper DR contracts and the extension-side chamber ER becomes larger, the hydraulic oil is supplied from the second accumulator AR to the extension-side chamber ER. The piston rods 4L and 4R are inserted in the extension-side chambers EL and ER, and the volume changes of the extension-side chambers EL and ER with respect to shifting amounts of the pistons 3L and 3R are smaller than the volume changes of the contraction-side chambers CL and CR. Therefore, the amount of hydraulic oil required for the extension-side chambers EL and ER when one of the first damper DL and the second damper DR contracts is smaller than the amount of hydraulic oil required for the contraction-side chambers CL and CR when one of the first damper DL and the second damper DR extends. In the suspension apparatus 1 according to the first embodiment, when one of the first damper DL and the second damper DR contracts, the hydraulic oil is supplied to the extension-side chambers EL and ER. In this case, the hydraulic oil passes through the first contraction-side damping valve CVR or the second contraction-side damping valve CVL. On the other hand, in the suspension apparatus 2 according to the second embodiment, when one of the first damper DL and the second damper DR extends, the hydraulic oil is supplied to the contraction-side chambers CL and CR. In this case, the hydraulic oil passes through the second extension-side damping valve EVR or the first extension-side damping valve EVL. In comparison of the two, the amount of hydraulic oil required when the extension-side chambers EL and ER become larger is smaller than the amount of hydraulic oil required when the contraction-side chambers CL and CR become larger. Therefore, the suspension apparatus 1 according to the first embodiment is advantageous in that setting pressures of the first accumulator AL and the second accumulator AR can be lowered. In other words, the suspension apparatus 1 according to the first embodiment can prevent the pressures of the extension-side chambers EL and ER from becoming equal to or lower than the atmospheric pressure, even when the setting pressures of the first accumulator AL and the second accumulator AR are lowered. In addition, since gas pressures of the first accumulator AL and the second accumulator AR can be lowered, the pressure acting on a sealing member (not illustrated) can be prevented from becoming higher. Therefore, a frictional force generated by the sealing member at a sliding portion of the suspension apparatus 1 can be prevented from becoming higher. The first damper DL and the second damper DR can smoothly extend and contract.

In addition, regarding the arrangement of the first damper DL and the second damper DR on a vehicle, according to the illustrated example, the first damper DL and the second damper DR are disposed between right/left wheels and the vehicle body in the vehicle, respectively, in such a way as to suppress the rolling of the vehicle body. If the first damper DL and the second damper DR are disposed between front/rear wheels and the vehicle body in the vehicle, respectively, the damping force acting against pitching of the vehicle body becomes larger and therefore can suppress the pitching of the vehicle body. Further, if the first damper DL and the second damper DR are disposed between front-right/rear-left wheels and the vehicle body in the vehicle or between front-left/rear-right wheels and the vehicle body in the vehicle, respectively, not only the damping force acting against the rolling of the vehicle body but also the damping force acting against the pitching of the vehicle body become larger and therefore can suppress both of the rolling and pitching of the vehicle body.

The following is summary of configurations, functions, and effects with respect to the embodiments of the present invention.

In the suspension apparatus according to the present embodiments, the first extension-side damping valve and the first contraction-side damping valve are provided in parallel with each other in the first flow path connecting the extension-side chamber of the first damper and the contraction-side chamber of the second damper. The second extension-side damping valve and the second contraction-side damping valve are provided in parallel with each other in the second flow path connecting the contraction-side chamber of the first damper and the extension-side chamber of the second damper. The first damping valve and the first check valve are provided in parallel with each other between the first flow path and the first accumulator. Further, the second damping valve and the second check valve are provided in parallel with each other between the second flow path and the second accumulator. The suspension apparatus having the above-mentioned configuration can obtain a large damping force for effectively suppressing the rolling of the vehicle body when extensions and contractions of the first damper and the second damper are opposite in phase. The valves required for the suspension apparatus are only the first extension-side damping valve, the first contraction-side damping valve, the second extension-side damping valve, and the second contraction-side damping valve, the first damping valve, the first check valve, the second damping valve, and the second check valve. Accordingly, the number of valves to be installed can be reduced, the entire system can be downsized, and the cost can be reduced.

In addition, according to the suspension apparatus having the above-mentioned configuration, when the hydraulic oil flows into the first accumulator and the second accumulator, the first damping valve or the second damping valve imparts resistance to the flow of the hydraulic oil. Therefore, a large damping force can be obtained when extensions and contractions of the first damper and the second damper are opposite in phase, and rolling of the vehicle body can be effectively suppressed. In addition, the first check valve is provided in parallel with the first damping valve, and the second check valve is provided in parallel with the second damping valve. Therefore, when hydraulic oil is supplied from first accumulator and the second accumulator to the first damper or the second damper, both the first check valve and the second check valve open so that the first damping valve and the second damping valve impart no resistance. Accordingly, the hydraulic oil can be speedily supplied to the first damper or the second damper. The pressure in each of the extension-side chamber and the contraction-side chamber can be prevented from becoming equal to or lower than the atmospheric pressure, without requiring setting higher pressures for the first accumulator and the second accumulator.

In addition, in the suspension apparatus according to the present embodiment, the first extension-side damping valve and the first contraction-side damping valve are provided in parallel with each other between the connecting point (CPL) of the first flow path and the extension-side chamber of the first damper, and the second extension-side damping valve and the second contraction-side damping valve are provided in parallel with each other between the connecting point (CPR) of the second flow path and the extension-side chamber of the second damper.

Further, in the suspension apparatus according to the present embodiment, the first extension-side damping valve and the first contraction-side damping valve are provided in parallel with each other between the connecting point (CPL) of the first flow path and the contraction-side chamber of the second damper, and the second extension-side damping valve and the second contraction-side damping valve are provided in parallel with each other between the connecting point (CPR) of the second flow path and the contraction-side chamber of the first damper.

The embodiments of the present invention described above are merely illustration of some application examples of the present invention and not of the nature to limit the technical scope of the present invention to the specific constructions of the above embodiments.

The present application claims a priority based on Japanese Patent Application No. 2015-186452 filed with the Japan Patent Office on September 24, 2015, all the contents of which are hereby incorporated by reference.

## Claims

1. A suspension apparatus comprising:
a first damper and a second damper each including a cylinder and a piston slidably inserted in the cylinder in such a way as to define an extension-side chamber and a contraction-side chamber in the cylinder;
a first flow path allowing the extension-side chamber of the first damper to communicate with the contraction-side chamber of the second damper;
a second flow path allowing the contraction-side chamber of the first damper to communicate with the extension-side chamber of the second damper;
a first accumulator connected to the first flow path;
a second accumulator connected to the second flow path;
a first extension-side damping valve provided in the first flow path, the first extension-side damping valve being configured to impart resistance to a flow of fluid from the extension-side chamber of the first damper to the contraction-side chamber of the second damper;
a first contraction-side damping valve provided in the first flow path in parallel with the first extension-side damping valve, the first contraction-side damping valve being configured to impart resistance to the flow of fluid from the contraction-side chamber of the second damper to the extension-side chamber of the first damper;
a second extension-side damping valve provided in the second flow path, the second extension-side damping valve being configured to impart resistance to the flow of fluid from the extension-side chamber of the second damper to the contraction-side chamber of the first damper;
a second contraction-side damping valve provided in the second flow path in parallel with the second extension-side damping valve, the second contraction-side damping valve being configured to impart resistance to the flow of fluid from the contraction-side chamber of the first damper to the extension-side chamber of the second damper;
a first damping valve configured to impart resistance to the flow of fluid from the first flow path to the first accumulator;
a first check valve disposed in parallel with the first damping valve in such a way as to enable fluid to flow only from the first accumulator to the first flow path;
a second damping valve configured to impart resistance to the flow of fluid from the second flow path to the second accumulator; and
a second check valve disposed in parallel with the second damping valve in such a way as to enable fluid to flow only from the second accumulator to the second flow path.

2. The suspension apparatus according to claim 1, wherein
each of the first damper and the second damper includes a rod slidably inserted in the extension-side chamber of the cylinder, the rod being connected to the piston,
the first extension-side damping valve and the first contraction-side damping valve are provided between the extension-side chamber of the first damper and a connecting point at which the first flow path and the first accumulator are connected, and
the second extension-side damping valve and the second contraction-side damping valve are provided between the extension-side chamber of the second damper and a connecting point at which the second flow path and the second accumulator are connected.

3. The suspension apparatus according to claim 1, wherein
each of the first damper and the second damper includes a rod slidably inserted in the extension-side chamber of the cylinder, the rod being connected to the piston,
the first extension-side damping valve and the first contraction-side damping valve are provided between the contraction-side chamber of the second damper and a connecting point at which the first flow path and the first accumulator are connected, and
the second extension-side damping valve and the second contraction-side damping valve are provided between the contraction-side chamber of the first damper and a connecting point at which the second flow path and the second accumulator are connected.
